# EUROPÄISCHE PATENTANMELDUNG

(11) **EP 1 154 201 A2**
(43) Veröffentlichungstag der Anmeldung: **14.11.2001**
(21) Anmeldenummer: 01890132.2
(22) Anmeldetag: 08.05.2001
(51) Int. Cl.: F23L 7/00, B05B 7/00, C21B 3/08, B01J 2/02

(54) **Einrichtung zur Erzeugung eines heissen Treibgasstromes**

(30) Priorität: 11.05.2000 AT 8252000
(71) Anmelder: Tribovent Verfahrensentwicklung GmbH, 6700 Lorüns (AT)
(72) Erfinder: Edlinger, Alfred, 6780 Bartholomäberg (AT)
(74) Vertreter: Haffner, Thomas M., Dr.

(57) **Zusammenfassung**

Die Einrichtung zur Erzeugung eines heißen Treibgasstromes für die Zerstäubung bzw. das nachfolgende Verglasen von flüssigen anorganischen Schmelzen, wie z.B. Schlacken oder Glas, mit einer Brennerkammer weist eine Brennerkammer (1) auf, in welcher eine Wand (6) angeordnet ist, welche sich in Achsrichtung und über den Umfang der Flamme (5) unter Ausbildung einer Ringkammer (8) erstreckt und Eintrittsöffnungen (7) für Wasser und/oder Dampf aufweist. An die Brennerkammer ist eine Lanze (11) angeschlossen. (Fig. 1)

## Beschreibung

Die Erfindung bezieht sich auf eine Einrichtung zur Erzeugung eines heißen Treibgasstromes für die Zerstäubung bzw. das nachfolgende Verglasen von flüssigen anorganischen Schmelzen, wie z.B. Schlacken oder Glas, mit einer Brennerkammer.

Zum Granulieren und Zerkleinern von flüssigen Schlacken wurde bereits vorgeschlagen, diese mit Dampf oder Treibgas in Granulierräume auszustoßen, wobei in der Folge eine weitere Zerkleinerung auch in Strahlmühlen unter Verwendung von Treibgasstrahl vorgeschlagen wurde. Ausgehend von Schlackentemperaturen zwischen 1400° und 1600° C besteht bei der Verwendung üblicher Treibgase aufgrund der relativ hohen Temperaturdifferenz zwischen dem Treibgasstrahl und der flüssigen Schlacke die Gefahr der Ausbildung mehr oder minder großer Agglomerate sowie weiters die Gefahr einer Fadenbildung, welche in der Folge den Zerkleinerungsaufwand erhöht und die Abkühlgeschwindigkeit empfindlich verringert. Die bekannten Vorschläge haben daher in erster Linie darauf abgezielt, die Abkühlung der flüssigen Schlacken möglichst rasch durchzuführen. Gemäß einem weiteren Vorschlag wurde die flüssige Schlacke mit Verbrennungsabgasen in einen Granulierraum ausgestoßen, um die Gefahr eines Verlegens der Schlackenaustrittsöffnung aus einem Schlackentundish durch erstarrende Schlacke zu reduzieren. Bei einer derartigen Vorgangsweise gelangen die in den Granulierraum eingestoßenen Schlackenpartikel mit wesentlich höherer Temperatur in eine nachgeschaltete Kühlzone, wobei die höheren Temperaturen eine geringere Schlackenviskosität und eine Verringerung der Oberflächenspannung der Schlackentröpfchen zur Folge haben, sodaß eine feinere zerteilung der Schlackentröpfchen beim Eintreten in die Kühlzone erzielt wird. Die feine Dispersion von Schlackentröpfchen führt zur Ausbildung von kleinsten Tröpfchen mit relativ hoher spezifischer Oberfläche, sodaß die Abkühlung in relativ kurzbauenden Kühlkammern erfolgen kann. Bei einer derartigen Einrichtung, bei welcher Verbrennungsabgase als Treibgase zum Einsatz gelangen, wurde in der Folge in der Kühlkammer Dampf und/oder Druckwasser gegen den Schlackenstrahl gerichtet, um die entsprechend rasche Abkühlung zu erzielen.

Die Erfindung zielt nun darauf ab, eine Einrichtung zur Erzeugung eines heißen Treibgasstromes zu schaffen, mit welcher es in einfacher Weise und unter geringem Kostenaufwand gelingt, Dampf und Dampfgasgemisch für einen derartigen Treibgasstrom auszubilden, bei welchem die Temperatur des Treibgases in weiten Grenzen einstellbar und regelbar ist. Wie bekannt, führen hohe Treibgastemperaturen zur Feinstzerstäubung der Schlackenpartikel, wobei die Schlackentröpfchendurchmesser unter 15 µ gehalten werden können. Bei geringeren Temperaturen, wie beispielsweise Temperaturen zwischen 600° und 1350° C, verändert sich der erzielbare maximale Schlackendurchmesser exponentiell und es werden insbesondere bei Temperaturen des Treibgasstrahles von etwa 600° C maximale Teilchendurchmesser von 110 µ gegenüber den bei etwa 1350° C im Treibgasstrom erzielbaren maximalen 15 µ Teilchendurchmesser beobachtet. Bei noch tieferen Temperaturen des Treibdampfes bzw. Treibgasstromes tritt dann die eingangs beschriebene Fadenbildung ein. Eine derartige Fadenbildung kann ohne weiteres auch beabsichtigt sein, wenn beispielsweise Schlackenwolle, Glasfasern oder Isolierwolle hergestellt werden soll.

Zur Schaffung einer konstruktiv einfachen Einrichtung der eingangs genannten Art mit einem großen Temperaturregelbereich des Treibgasstromes ist die erfindungsgemäße Ausbildung im wesentlichen dadurch gekennzeichnet, daß die Brennerkammer in Achsrichtung und über den Umfang der Flamme verteilte Eintrittsöffnungen für Wasser und/oder Dampf in einer die Achse des Brenners umgebenden Wand, welche mit der Wand der Brennerkammer eine Ringkammer ausbildet, aufweist und daß an die Brennerkammer eine Lanze mit Düse angeschlossen ist. Dadurch, daß im Inneren der Brennerkammer eine zusätzliche Wand vorgesehen ist, wird zum einen die Möglichkeit geschaffen die Eintrittsöffnungen für Wasser und/oder Dampf, welche beispielsweise von Bohrungen oder Schlitzen gebildet sind, in der entsprechenden Weise anzuordnen, um ein Eindüsen von Wasser und/oder Dampf in den Treibgasstrom und insbesondere in die Flamme des Brenners zu bewirken, wobei gleichzeitig eine Ringkammer ausgebildet ist, welche aufgrund des zugeführten Druckwassers oder Dampfes entsprechend kühler als die Flamme ist. Dadurch kann der Innenraum der Brennerkammer, in welchem die Brennstoffe mit einer Flamme verbrennen, durch Strahlungskühlung gekühlt werden und somit ein großer Teil der Brennerkammer effizient gekühlt und daher aus einfacheren Materialien ausgebildet werden. Lediglich im Unterteil einer derartigen Brennerkammer kann eine zusätzliche feuerfeste Auskleidung oder eine Ausbildung aus feuerfestem Material, wie z.B. Tonerde, Magnesit, Silika, Zirkon, Quarz, Siliziumkarbid oder Siliziumnitrid, erforderlich werden, wenn die Wasser- bzw. Dampfzufuhr so eingestellt wird, daß sich relativ hohe Treibgasstromtemperaturen ergeben. Durch geregeltes Einbringen von Druckwasser bzw. Dampf in die Ringkammer läßt sich die gewünschte Temperatur in weiten Bereichen einstellen, wobei das Brennerkammersystem einer Art innenbefeuertem Dampfüberhitzer entspricht. Thermodynamisch ergibt sich bei einer derartigen Ausbildung ein optimaler Wirkungsgrad von nahezu 100 %, wobei durch entsprechende Turbulenzen in der Brennerkammer eine kurze Wärmeübergangszeit realisiert werden kann, sodaß mit einem relativ kleinbauenden und überaus kompakten kostengünstigen Aufbau im Vergleich zu konventionellen Überhitzersystemen das Auslangen gefunden wird. Die Verbrennungsenthalpie der Dampfbrennerkammer kann in der nachfolgenden Kühl- bzw. Verglasungskammer, in welcher die flüssigen anorganischen Schmelzen ausgestoßen werden, weitestgehend auf geringerem Temperaturniveau rückgewonnen werden, sodaß sich eine hohe energetische Effizienz ergibt.

Mit Vorteil ist die erfindungsgemäße Einrichtung so weitergebildet, daß die Eintrittsöffnungen für Wasser und/oder Sattdampf in einer im wesentlichen glockenförmigen oder konischen Wand im Inneren der Brennerkammer angeordnet sind. Derartige im wesentlichen konische oder glockenförmige Wandteile, welche die außenliegende Ringkammer nach innen begrenzen, tragen der Expansion des Dampfes nach dem Eintritt in den Flammenraum Rechnung, wobei der Übertritt des Kühldampfes in den Brennerraum in besonders einfacher Weise über ein perforiertes oder geschlitztes Blech erfolgen kann, wobei konventionelle Werkstoffe, wie beispielsweise im Gasturbinenbau verwendbare Werkstoffe, zum Einsatz gelangen können. In besonders vorteilhafter Weise ist die Ausbildung hiebei so getroffen, daß die glockenförmige oder konische Wand den Brenner der Brennerkammer konzentrisch umschließt, wobei die Erzeugenden der Wand von der Brennerdüse zur Flammenspitze des Brenners divergierend ausgebildet sind.

Um der raschen Expansion des Dampfes nach dem Übertritt in die Brennerkammer Rechnung zu tragen, kann alternativ die Ausbildung auch so getroffen sein, daß die Eintrittsöffnungen für Wasser und/oder Sattdampf in einer im wesentlichen zylindrischen Wand angeordnet sind, welche die Achse des Brenners konzentrisch umgibt, wobei die lichte Weite der Durchbrechungen in voneinander verschiedenen Querschnittsebenen voneinander verschieden ist und insbesondere zur Flammenspitze hin zunimmt. In allen Fällen kann die Temperatur der heißen Brennerflamme, die bei adiabatischer Verbrennung etwa 2400° C beträgt, durch Zugabe von Naß- oder Sattdampf auf die geforderte Zieltemperatur, beispielsweise zwischen 120° und 1350° C, eingestellt werden, wobei die Brennerkammer direkt und indirekt mittels Naß- bzw. Sattdampf gekühlt wird.

Eine geeignete Steuerung bzw. Regelung der jeweils gewünschten Betriebsparameter läßt sich dadurch erzielen, daß an die Ringkammer ein druckabhängig steuerbares Entlastungsventil angeschlossen ist, welches vom Vordruck des Treibgasstrahles steuerbar ist. Auf diese Weise kann der Druck in der Ringkammer, welche als Verdampfer- bzw. Überhitzerkammer wirksam wird, entsprechend geregelt und in einer Weise abgebaut werden, daß beispielsweise mittels des auf diese Weise abgelassenen Druckes Brennstoffe vorerwärmt und unter entsprechenden Vordruck gesetzt werden. Mit Vorteil kann die Regelung aber auch so erfolgen, daß die Wasser-, Dampf-, Verbrennungsluft- und/oder Brennstoffzufuhr zur Brennerkammer über ein Steuerventil geführt ist, welches in Abhängigkeit vom Druck und/oder der Temperatur des Treibgasstrahles steuerbar ist. In allen Fällen gelingt es auf diese Weise einen bestimmten vorgegebenen Vordruck in der angeschlossenen Brennerlanze aufrechtzuerhalten und die gewünschte Temperatur entsprechend den Erfordernissen nachzuführen.

Der Übergang aus der Brennerkammer in die nachfolgende Lanze kann mit Vorteil so ausgebildet sein, daß die Brennerkammer über einen Trichter mit der Lanze verbunden ist, wodurch sich strömungstechnische Vorteile ergeben und die Möglichkeit geschaffen wird, im Bereich des Trichters oder am Austritt des Trichters die entsprechenden Druck- und Temperaturmeßwerte für die Regelung zu gewinnen.

Mit Vorteil wird die erfindungsgemäße Einrichtung so eingesetzt, daß flüssige anorganische Schmelzen, insbesondere Schlacken oder Glas, über eine Düse in einen nachfolgenden Kühl- oder Verglasungsraum ausgestoßen werden, wobei die Lanze entsprechend relativ zur Düse für den Ausstoß der flüssigen anorganischen Schmelzen justierbar sein soll. Zu diesem Zweck ist mit Vorteil die Ausbildung so getroffen, daß die Brennerkammer mit der Lanze in Höhenrichtung verstellbar gelagert ist. Um im Bereich der heißen Schlacke die entsprechende thermische Beständigkeit der Lanze zu gewährleisten, ist mit Vorteil die Ausbildung so getroffen, daß die Lanze aus einer oxiddispersiven Superlegierung, insbesondere Fe oder Ni Basismaterial mit Al, Cr und weniger als 1 Gew.% Y₂O₃ besteht. Y₂O₃ erhöht hiebei die Hochtemperaturkriechbeständigkeit während Beimengungen von Aluminium und Chrom einen Schutz gegen Heißkorrosion und insbesondere Oxidation im Bereich der Mündung der Lanze bewirken.

Der Brenner selbst kann mit Heißluft beispielsweise im Temperaturbereich zwischen 800° und 1200° C sowie Erdgas, aber auch Erdöl und Kohlestaub betrieben werden, wobei in der Brennerkammer CO₂, H₂O und Stickoxide gebildet werden und mit Rücksicht auf die eingesetzte Heißluft ein relativ hoher Stickstoffanteil verbleibt. Bei Kühlung mit Sattdampf bei 2 bar in der Brennerkammer kann eine Kühlung auf 900° C extrem überhitzten Wasserdampf mit relativ hohem Stickstoffanteil ergeben, sodaß ein weitestgehend inerter Treibgasstrom gebildet wird. Eine derartige Betriebsweise hat bei nachgeschalteten physikalischen Verglasungsvorgängen insbesondere den Vorteil, daß der N₂-Anteil im Treibgasstrom den Taupunkt wesentlich herabsetzt und unerwünschte mögliche Kondensationsvorgänge im Kühlsystem besser vermieden werden können. Heißluft kann in konventioneller Weise in Regenerativwärmetauschern hergestellt werden.

Aus wirtschaftlichen Gründen kann bei der Zerstäubung von flüssigen Hochofenschlacken bevorzugt mit Heißwind und beispielsweise Erdgas gearbeitet werden, wobei die jeweils gewünschte Teilchengröße durch Einstellung der Treibgastemperatur und entsprechende Justierung der Lanze in der Schlackenaustrittsdüse den jeweiligen Bedürfnissen angepaßt werden kann. Durch die Möglichkeit die Dampftemperatur in weiten Grenzen einzustellen, kann auch unterschiedlichen Schmelztemperaturen der anorganischen Schmelzen, welche üblicherweise zwischen 1180° und 1560° C im Fall von oxidischen Schmelzen entspricht, Rechnung getragen werden.

Mit der erfindungsgemäßen Brennerkammer kann beispielsweise unter Einsatz von 17 g Wasserstoff und 136 g Sauerstoff sowie 848 g Dampf bei 2 bar und 145° C 1000 g Dampf mit einer Temperatur von 1350° C unter einem Druck von 2 bar hergestellt werden und als Treibgasstrom eingesetzt werden. Alternativ kann mit 10 g Wasserstoff und 81 g Sauerstoff unter Einsatz von 909 g Dampf bei 2 bar und 145° C eine Zielmenge von 1000 g Dampf mit einer Temperatur von 800° C und 2 bar hergestellt werden, wobei der unter 2 bar zugeführte Dampf über die perforierten Wände zunächst auf Brennraumdruck entspannt und in der Folge durch die Flamme wiederum überhitzt wird.

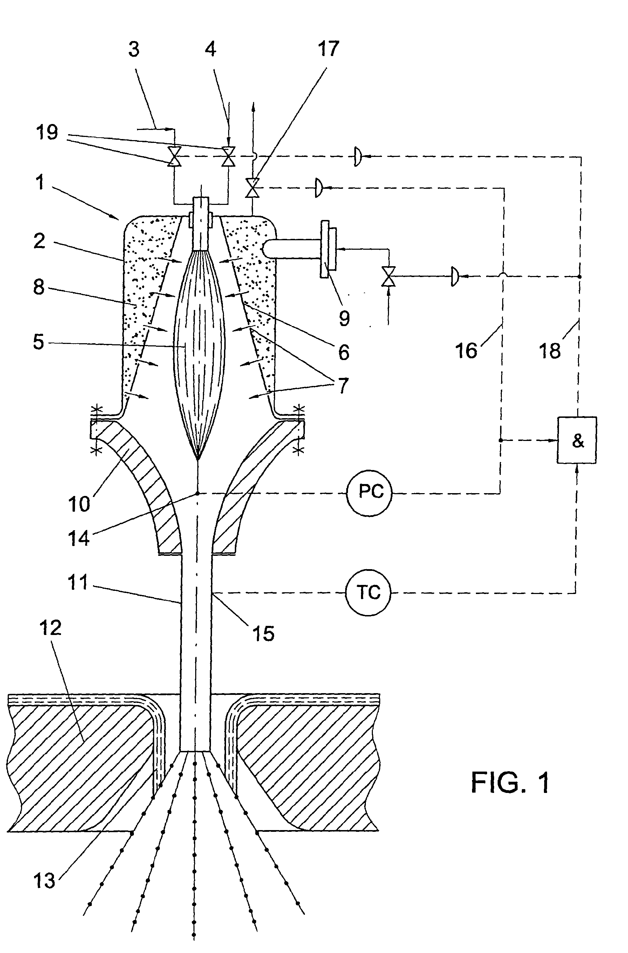

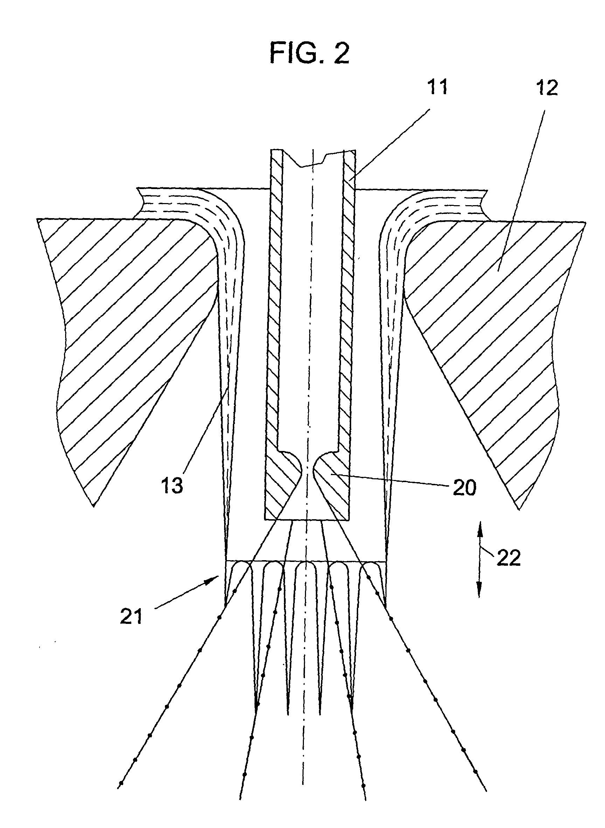

Die erfindungsgemäße Einrichtung zur Erzeugung eines heißen Treibgasstromes wird nun anhand eines in der Zeichnung schematisch dargestellten Ausführungsbeispieles näher erläutert. In dieser zeigt Fig. 1 eine Brennerkammer mit einer an die Brennerkammer angeschlossenen Lanze und Fig. 2 eine Detailansicht der Anordnung der Dampflanze innerhalb des Schlackenauslaufes.

In Fig. 1 ist eine Brennerkammer 1 dargestellt, deren Außenwand mit 2 bezeichnet ist. Dem Brenner werden über eine Leitung 3 O₂, Luft oder Heißluft und über eine Leitung 4 Brennstoffe, wie z.B. H₂, CH₄, CO, Erdgas, Erdöl oder Kohlenstoff, zur Ausbildung einer Flamme 5 zugeführt, wobei die Flamme 5 von einer konischen Wand 6 umgeben wird, welche über den Umfang der Flamme 5 verteilte Eintrittsöffnungen 7 für Wasser und/oder Dampf aufweist. Zwischen der konischen Wand 6 und der Außenwand 2 der Brennerkammer 1 wird hiebei eine Ringkammer 8 ausgebildet, in welche über einen Anschluß 9 Naß- bzw. Sattdampf oder Wasser eingeleitet wird. Durch die von der Flamme 5 abgestrahlte Wärme erfolgt eine rasche Expansion des in die Ringkammer 8 eingeleiteten Dampfes oder Wassers, wobei eine weitere Überhitzung des Dampfes auf bis zu 1350° C dadurch erreicht wird, daß der Dampf über die Öffnungen 7 von der Ringkammer 8 in den unmittelbaren Bereich der Flamme 5 ausgestoßen wird. Die Flamme 5 wird hiebei von einer Temperatur von ungefähr 2400° C auf die geforderte Zieltemperatur von zwischen 120° bis 1350° C gekühlt.

Die Brennerkammer ist über einen trichterförmigen und mit feuerfestem Material ausgekleideten Unterteil 10 mit der Dampflanze 11 verbunden, welche innerhalb eines über eine Schlackendüse 12 austretenden Schlackenmantels 13 mündet. Zur Steuerung und Einstellung der Dampfstrahlparameter ist eine Druckmessung 14 sowie eine Temperaturmessung 15 vorgesehen. Über eine Steuerleitung 16 wird hiebei ein druckabhängig steuerbares Entlastungsventil 17 für die Entlastung der Ringkammer 8 angesteuert, die Zufuhr von O₂, Luft, Heißluft bzw. Brennmaterial zum Brenner wird über eine Steuerleitung 18 und über in die Leitungen 3 und 4 eingeschaltete Ventile 19 in Abhängigkeit der Druck- und Temperaturwerte geregelt.

In Fig. 2 ist eine vergrößerte Darstellung der Anordnung der Dampflanze 11 innerhalb der Schlackendüse 12 und des als Hohlzylinder ausströmenden Schlackenstromes 13 näher dargestellt. Hiebei ist ersichtlich, daß das Ende der Dampflanze 11 als Düse 20 ausgebildet ist, sodaß eine optimale Zerstäubung der Schmelze erreicht wird. In Folge der Erdbeschleunigung verringert sich die Wandstärke des Schlackenhohlyzlinders 13 stetig, bis sich dieser im Bereich 21 in einzelne Strähnen aufzuteilen beginnt. Es hat sich als vorteilhaft herausgestellt, die Mündung der Düse 20 bis kurz vor den Bereich der Strähnenbildung heranzuführen. Dies begünstigt den Schlackenzerstäubungsvorgang außerordentlich. Ein weiterer entscheidender Parameter zur Erhöhung der Effizienz ist die Freistrahllänge, welche insbesondere den spezifischen Treibgasverbrauch beeinflußt. Die Freistrahllänge ist hiebei als Länge zwischen dem Austritt des Treibdampfes aus der Lanzendüse 20 und den Auftreffpunkt des Treibstrahles auf den Schmelzehohlzyinder 13 definiert. Diese Länge ist im vorliegenden Fall möglichst klein zu halten. Zur genauen Einstellung des Auftreffpunktes des Dampfstrahles auf den Schlackenhohlzylinder und zur Minimierung der Freistrahllänge ist die Dampflanze 11 in Richtung des Doppelpfeiles 22 in Höhenrichtung verstellbar angeordnet.

## Patentansprüche

1. Einrichtung zur Erzeugung eines heißen Treibgasstromes für die Zerstäubung bzw. das nachfolgende Verglasen von flüssigen anorganischen Schmelzen, wie z.B. Schlacken oder Glas, mit einer Brennerkammer, **dadurch gekennzeichnet, daß** die Brennerkammer (1) in Achsrichtung und über den Umfang der Flamme (5) verteilte Eintrittsöffnungen (7) für Wasser und/oder Dampf in einer die Achse des Brenners umgebenden Wand (6), welche mit der Wand (2) der Brennerkammer (1) eine Ringkammer (8) ausbildet, aufweist und daß an die Brennerkammer (1) eine Lanze (11) mit Düse (20) angeschlossen ist.

2. Einrichtung nach Anspruch 1, **dadurch gekennzeichnet, daß** die Eintrittsöffnungen (7) für Wasser und/oder Sattdampf in einer im wesentlichen glockenförmigen oder konischen Wand (6) im Inneren der Brennerkammer (1) angeordnet sind.

3. Einrichtung nach Anspruch 2, **dadurch gekennzeichnet, daß** die glockenförmige oder konische Wand (6) den Brenner der Brennerkammer (1) konzentrisch umschließt, wobei die Erzeugenden der Wand (6) von der Brennerdüse zur Flammenspitze des Brenners divergierend ausgebildet sind.

4. Einrichtung nach Anspruch 1, **dadurch gekennzeichnet, daß** die Eintrittsöffnungen (7) für Wasser und/oder Sattdampf in einer im wesentlichen zylindrischen Wand angeordnet sind, welche die Achse des Brenners konzentrisch umgibt, wobei die lichte Weite der Durchbrechungen (7) in voneinander verschiedenen Querschnittsebenen voneinander verschieden ist und insbesondere zur Flammenspitze hin zunimmt.

5. Einrichtung nach einem der Ansprüche 1 bis 4, **dadurch gekennzeichnet, daß** an die Ringkammer (8) ein druckabhängig steuerbares Entlastungsventil angeschlossen ist, welches vom Druck des Treibgasstrahles steuerbar ist.

6. Einrichtung nach einem der Ansprüche 1 bis 5, **dadurch gekennzeichnet, daß** die Wasser-, Dampf- und/oder Verbrennungsluftzufuhr zur Brennerkammer (1) über ein Steuerventil (19) geführt ist, welches in Abhängigkeit vom Druck und/oder der Temperatur des Treibgasstrahles steuerbar ist.

7. Einrichtung nach einem der Ansprüche 1 bis 6, **dadurch gekennzeichnet, daß** die Brennerkammer (1) über einen Trichter (10) mit der Lanze (11) verbunden ist.

8. Einrichtung nach einem der Ansprüche 1 bis 7, **dadurch gekennzeichnet, daß** die Brennerkammer (1) mit der Lanze (11) in Höhenrichtung verstellbar gelagert ist.

9. Einrichtung nach einem der Ansprüche 1 bis 8, **dadurch gekennzeichnet, daß** die Lanze (11) aus einer oxiddispersiven Superlegierung, insbesondere Fe oder Ni Basismaterial mit Al, Cr und weniger als 1 Gew.% Y₂O₃ besteht.
